# EUROPÄISCHE PATENTSCHRIFT

(11) **EP 3 068 719 B1**
(45) Veröffentlichungstag und Bekanntmachung des Hinweises auf die Patenterteilung: **02.01.2019**
(21) Anmeldenummer: 14796064.5
(22) Anmeldetag: 07.11.2014
(51) Int. Cl.: B66B 5/22

(54) **FANGVORRICHTUNG FÜR EINEN AUFZUG**
ARRESTING DEVICE FOR A LIFT
DISPOSITIF ANTICHUTE POUR ASCENSEUR

(30) Priorität: 15.11.2013 EP 13193196
(43) Veröffentlichungstag der Anmeldung: 21.09.2016
(73) Patentinhaber: Inventio AG, 6052 Hergiswil (CH)
(72) Erfinder: OSMANBASIC, Faruk, CH-5643 Sins (CH); MUFF, Josef A., CH-6024 Hildisrieden (CH); GREMAUD, Nicolas, Moris Plains, New Jersey 07950 (US)
(86) Internationale Anmeldenummer: PCT/EP2014/074047
(87) Internationale Veröffentlichungsnummer: WO 2015/071188

(56) Entgegenhaltungen:
- EP-A1- 1 902 993
- WO-A1-2013/165339
- US-A- 2 716 467

## Beschreibung

Die vorliegende Erfindung betrifft eine Fangvorrichtung für einen Aufzug, ein Verfahren zum Bewegen eines Bremselements einer Fangvorrichtung sowie einen Aufzug mit einer Fangvorrichtung gemäss dem Oberbegriff der unabhängigen Ansprüche.

Aus dem Stand der Technik sind Fangvorrichtungen für Aufzüge bekannt, welche im Wesentlichen aus einem Bremsgehäuse mit einem Bremskeil bestehen. Die Fangvorrichtungen sind in der Regel in einer Paaranordnung an einer Aufzugskabine oder einem Gegengewicht des Aufzugs angeordnet. Die Aufzugskabine und das Gegengewicht sind entlang von Führungsschienen geführt. Die Fangvorrichtung kann bedarfsweise auf die Führungsschienen einwirken um die Aufzugskabine beziehungsweise das Gegengewicht zu stoppen. Die Fangvorrichtungen sind von Geschwindigkeitsbegrenzern oder von Sicherheitssteuerungen gesteuert. Diese Sicherheitssteuerung beziehungsweise der Geschwindigkeitsbegrenzer überwacht einen Betrieb des Aufzuges und betätigt im Bedarfsfall, wenn beispielsweise eine zu hohe Fahrgeschwindigkeit festgestellt wird, die Fangvorrichtung. Diese Betätigung soll in der Regel schnell erfolgen. Es wurden verschiedentlich Anstrengen unternommen, um die Einrückzeiten derartiger Fangvorrichtungen zu verbessern. Ausserdem gibt es im Stand der Technik Ansätze, um derartige Vorrichtungen mit einem automatischen Rückstellsystem auszustatten.

EP 1 902 993 A1 zeigt beispielsweise eine Fangvorrichtung, welche anstelle eines Keils eine Reibrolle aufweist. Die Reibrolle bewegt sich in einer Kulisse, welche von einem Elektromagneten gehalten wird. Bei Auslösen der Vorrichtung wird der Elektromagnet spannungsfrei gemacht. Er gibt die Kulisse frei, welche über eine Feder zusammen mit der Reibrolle an eine Führungsschiene eines Aufzuges gedrückt wird. Zwischen Kulisse und Magnet entsteht ein Spalt. Durch das Verschieben der Reibrolle in eine Fangposition wird die Kulisse wieder in Richtung des Magneten gedrückt, wobei der Magnet wieder bestromt werden kann und die Kulisse wieder in der Ruheposition hält. Beim Lösen der Fangvorrichtung wird die Reibrolle über einen Federmechanismus in ihre ursprüngliche Position gezogen. Die Feder, welche auf die Kulisse drückt und die Feder, welche die Reibrolle zurückzieht, wirken gegensinnig. Dies ist besonders nachteilig, da keine der beiden Federn ihre Kraft vollständig entwickeln kann.

Ein weiterer Nachteil besteht darin, dass es verhältnismässig lange dauert, bis die Fangeinrichtung in einer Fangposition ist und den Aufzug bremsen kann.

US 2,716,467 A offenbart eine Fangvorrichtung gemäß dem Oberbegriff des Anspruchs 1.

Es ist Aufgabe der Erfindung, die Nachteile des Standes der Technik zu überwinden.

Insbesondere soll eine Fangvorrichtung für einen Aufzug zur Verfügung gestellt werden, welcher die Einrückzeit der Fangvorrichtung verkürzt. Ausserdem soll eine einfache Zurückstellung der Fangvorrichtung ermöglicht werden.

Diese Aufgabe wird durch die in den unabhängigen Patentansprüchen definierten Vorrichtungen und Verfahren gelöst. Weiter Ausführungsformen ergeben sich aus den abhängigen Patentansprüchen.

Eine derartige Fangvorrichtung für einen Aufzug umfasst wenigstens ein Bremselement. Ausserdem ist ein Führungselement vorgesehen, auf welchem das Bremselement in einer Führung verschiebbar gelagert ist. Das Führungselement ist zwischen einer Ruheposition und einer Bremsinitialposition bewegbar. In der Ruheposition ist das Bremselement von einer vorzugsweise von einer Führungsschiene des Aufzugs gebildeten Gegenfläche distanziert. In der Bremsinitialposition ist das Bremselement in Kontakt mit der Gegenfläche. Die Fangvorrichtung umfasst des Weiteren eine Stelleinrichtung mit einem Betätigungselement. Das Betätigungselement wirkt auf das Führungselement, um das Führungselement von der Ruheposition in die Bremsinitialposition zu bewegen. Die Fangvorrichtung umfasst wenigstens ein zusätzliches Aktivierungselement, welches von der Stelleinrichtung unterschiedlich ist. Das Aktivierungselement ist beim Aktivieren der Fangvorrichtung in Wirkverbindung mit dem Bremselement oder es ist mit dem Bremselement in Wirkverbindung bringbar. Das Bremselement wird mittels des Aktivierungselements mit zumindest einer Bewegungskomponente in einer Richtung entlang seiner Bremsfläche gegen eine Fangposition hin bewegt.

Vorzugsweise ist das Bremselement ein Bremskeil. Der Bremskeil weist eine Bremsfläche auf. In der Bremsinitialposition ist der Bremskeil mit seiner Bremsfläche in Kontakt mit der Gegenfläche. Ein Bremskeil als Bremselement ist vorteilhaft, da mittels Bremskeilen eine Bremskraft mit einfachen Mitteln aufgebaut werden kann, da nach einem Andrücken des Bremskeils beziehungsweise der Bremsfläche des Bremskeils an die Gegenfläche der Bremskeil selbsttätig in eine entsprechend geformte Keilöffnung der Fangvorrichtung eingezogen wird.

Hier und im Folgenden wird unter einer Fangposition eine Position des Bremselements beziehungsweise des Bremskeiles verstanden, in welcher der Bremskeil eine Endposition einnimmt, wobei die Endposition beispielsweise durch eine Begrenzung des Verfahrweges des Bremskeiles definiert ist. In der Fangposition ist die Bremsfläche des Bremskeiles definitionsgemäss in Wirkverbindung mit der Gegenfläche. Der Verfahrweg kann insbesondere auch dadurch begrenzt sein, dass der Bremskeil eine verkeilte Stellung einnimmt, in der er nicht weiter bewegbar ist. Dies ist im Besonderen dann gegeben, wenn eine Fahrgeschwindigkeit so gering ist, dass ein entsprechender Fahrkörper schon während dem Einrückvorgang zum Stillstand kommt.

Das bewegbare Führungselement ist erfinderischgemäß derart gestaltet, dass es während des Bremsvorganges in seine ursprüngliche Ruheposition zurück bewegbar ist, wobei das Führungselement insbesondere in Wechselwirkung mit dem Bremskeil in seine ursprüngliche Ruheposition bewegbar ist. Die verschiebbare Lagerung des Bremskeiles auf dem Führungselement begünstigt dies und vermindert Verscheiss und Reibung.

Eine derartige Vorrichtung mit einem zusätzlichen Aktivierungselement ermöglicht eine frühe erzwungene Bewegung des Bremskeils in Richtung seiner Fangposition. Dadurch wird die Einrückzeit der Fangvorrichtung verkürzt, da das Bewegen des Führungselements zusammen mit dem auf dem Führungselement gelagerten Bremskeil in Richtung der Bremsfläche sowie das Bewegen des Bremskeils mittels des Aktivierungselements in Richtung der Fangposition gleichzeitig erfolgt. Damit kann ein Durchfahrtsspiel zwischen der Bremsfläche des Bremskeils und der Gegenfläche schnell verringert werden. Die Bremsfläche des Bremskeils wird somit schnell von der Ruheposition in die Bremsinitialposition verschoben und entsprechend in Kontakt mit der Gegenfläche gebracht. Durch eine vom Betätigungselement bewirkte Anpresskraft an die Gegenfläche wird der Bremskeil ab diesem Zeitpunkt selbsttätig in die Fangposition weiterbewegt, da der Bremskeil auf der Gegenfläche haften bleibt. Das Aktivierungselement bewegt somit im Wesentlichen den Bremskeil lediglich in Richtung der Fangposition bis das Durchfahrtsspiel aufgehoben ist. Bedingung dafür ist natürlich, dass ein Keilwinkel des Bremskeils und der entsprechenden Form des Bremsgehäuses klein gewählt wird, so dass die zu erwartende Reibkraft zwischen Bremsfläche des Bremskeils und der Gegenfläche grösser als eine durch die Keilschräge bewirkte Rückstellkraft ist.

Die Bremsfläche kann insbesondere eine strukturell günstige Oberfläche aufweisen, um die Bremswirkung zu verbessern oder eine höhere Reibung zur Verfügung zu stellen. Beispielsweise kann die Bremsfläche mit einer Struktur, Rillen oder mit einer speziellen Beschichtung versehen sein. Eine Kombination ist selbstverständlich auch möglich.

In einer bevorzugten Ausführungsform ist das Führungselement beim Aktivieren der Fangeinrichtung in Wirkverbindung mit dem Aktivierungselement bringbar. Die Stelleinrichtung kann somit sowohl auf das Führungselement als auch auf das Aktivierungselement wirken. Eine derartige Wirkverbindung, welche insbesondere mechanischer Art sein kann, führt zu einem erzwungenen Bewegungsablauf.

Bevorzugt ist das Aktivierungselement an einem Bremsgehäuse der Fangvorrichtung schwenkbar befestigt. Das Aktivierungselement kann am Führungselement angelenkt sein. Eine Schwenkverbindung der einzelnen Elemente ermöglicht es, die Fangvorrichtung genau einzustellen und den Bewegungsablauf und die Wirkweise genau aufeinander abzustimmen. Eine hohe Nachvollziehbarkeit ist gewährleistet. Wenn das Aktivierungselement an dem Führungselement angelenkt ist, kann das Aktivierungselement im Sinne einer Kulissensteuerung bewegt werden. Zeitliche Abläufe sind auf einfache Art realisiert.

Das Aktivierungselement kann eine Rolle aufweisen, welche auf dem Bremskeil wirkt und somit die Wirkverbindung mit dem Bremskeil herstellen kann. Dies ist besonders vorteilhaft, da Reibungsverluste vermieden werden. Ausserdem sind Fehlfunktionen durch etwaiges verharken der Einzelteile in- oder aneinander ausgeschlossen.

Das Aktivierungselement kann als Hebel ausgebildet sein und insbesondere eine gekrümmte Kontur aufweisen. Die gekrümmte Kontur ermöglicht es, den Bremskeil auch zu bewegen, falls die Anordnung beispielsweise derart gestaltet ist oder gestaltet werden muss, dass der Bremskeil nicht direkt zugänglich ist, oder hinter einer Kontur beispielsweise des Führungselementes zu liegen kommt.

Das Aktivierungselement kann einen Anlenkpunkt und insbesondere eine Anlenkachse aufweisen, welche dazu geeignet ist, als Anlenkpunkt für das Führungselement zu wirken. Ein derartiger Anlenkpunkt ist im Wesentlichen zwischen einer Schwenkachse des Aktivierungselementes und der Rolle, die auf den Bremskeil wirkt, positioniert. Eine derartige Ausgestaltung und Anordnung des Aktivierungselementes ermöglicht es, über Hebelgesetze entsprechend grosse Verfahrwege zu erreichen.

Bevorzugt ist das Führungselement am Bremsgehäuse schwenkbar um eine Führungsachse befestigt. Eine Führungsachse als Schwenkachse ermöglicht eine freie Drehung des Führungselementes, verhindert jedoch beispielsweise ein axiales Verschieben des Führungselementes.

Der Bremskeil ist auf dem Führungselement in einer Führung verschiebbar gelagert. Bevorzugt ist eine derartige Führung als Rollenkäfig ausgebildet. Solche Rollenkäfige ermöglichen eine passgenaue Fertigung sowie eine lineare Führung ohne Spiel. Grosse Kräfte können aufgenommen werden.

Das Betätigungselement kann mindestens ein Halteelement und Druckelement umfassen. Bevorzugt ist das Halteelement als Elektromagnet ausgebildet und das Druckelement umfasst eine Spiralfeder. Die Aufteilung des Betätigungselementes in ein Halteelement und ein Druckelement vermeidet die Notwendigkeit einer bidirektionalen Wirkung von einzelnen Elementen aus. Jedes Element muss nur noch einseitig wirken. Doppelaufgaben werden somit vermieden und die Elemente müssen nur bezüglich einer Wirkungsrichtung ausgelegt werden.

Das Halteelement ist bevorzugt am Führungselement befestigt und schwenkt beim Aktivieren der Fangvorrichtung mit dem Führungselement mit. Gewichtskräfte des Halteelementes können beim Schwenken des Führungselementes unterstützend wirken. Es ist jedoch auch möglich, das Halteelement am Bremsgehäuse oder an der Stelleinrichtung zu befestigen. Je nach Art des Halteelementes kann somit eine Konfiguration gefunden werden, die beispielsweise für Zusatzeinrichtungen wie Stromzufuhr und dergleichen geeignet ist.

Das Druckelement kann direkt oder indirekt in Wirkverbindung mit dem Führungselement stehen. Bevorzugt weist das Druckelement eine Verstelleinrichtung auf. Über die Verstelleinrichtung kann die Druck-/Aktivierungskraft des Druckelementes entsprechend den vorherrschenden Betriebsbedingungen eingestellt werden. Eine Nachjustierung im Falle von Verschleiss ist ebenfalls möglich.

Die Fangvorrichtung kann zusätzlich eine Führungsplatte mit einer Führungskontur zum Führen des Bremskeiles aufweisen. Eine zusätzliche Führungsplatte kann über die Führungskontur Kräfte aufnehmen und beispielsweise an das Bremsgehäuse übertragen.

Bevorzugt ist der Bremskeil mit einer Führungsachse in der Führungskontur gelagert und geführt. Eine derartige Kontur kommt einer Zwangssteuerung gleich, die es ermöglicht, den Bremskeil in vorgesehenen Bahnen zu führen.

Es ist jedoch auch vorstellbar, dass die Führungskontur als ein Teil des Bremsgehäuses ausgebildet ist. Eine Kombination aus einer Führungskontur in einer Führungsplatte einerseits und zusätzlich einer Führungskontur im Bremsgehäuse ist ebenfalls vorstellbar. Die Führungskontur kann zu einer Wirkachse der Fangeinrichtung einen Keilwinkel aufweisen. Die Wirkachse der Fangeinrichtung ist dabei im Wesentlichen parallel zu einer Bewegungsachse des Aufzugs.

Bevorzugt weist die Führung eine gekrümmte Kontur auf. Die gekrümmte Kontur weist bevorzugt eine konvexe Wölbung zur Wirkachse hin auf. Bei einer gekrümmten Kontur ist der Keilwinkel variabel und jeweils als Winkel zwischen einer Tangente der Kontur und der Wirkachse definiert. Bevorzugt wird der Winkel in Richtung zur Fanposition hin stetig kleiner. Ein besonderer Vorteil einer gekrümmten Kontur liegt darin, dass die Einrückzeit der Fangvorrichtung zusätzlich verkürzt werden kann. Wenn die Kontur einen veränderlichen Keilwinkel aufweist, der am Anfang der Kontur steiler ist, als gegen Ende der Kontur in Richtung Fangposition, so kann eine Bewegung des Bremskeiles mit der Bremsfläche hin zur Gegenfläche forciert werden. Ein Kontakt der Bremsfläche mit der Gegenfläche findet bezüglich einer ungekrümmten Kontur früher statt.

Die Fangvorrichtung kann zusätzlich eine Bremsplatte aufweisen, welche insbesondere auf einer dem Bremskeil gegenüber liegenden Seite angeordnet ist. Bevorzugt ist eine derartige Bremsplatte auf einem nachgiebigen Element gelagert, welches nachgiebige Element insbesondere ein Federpaket ist. Für das Federpaket werden bevorzugt Tellerfederpakete verwendet. Der Einsatz eines nachgiebigen Elementes an der Bremsplatte ermöglicht eine Bremsung, bei welcher die Bremskraft stetig ansteigt.

Die Bremsplatte kann ähnlich wie der Bremskeil mit einem Bremsbelag versehen sein, der eine Struktur aufweist, die beispielsweise erhöhte Reibwerte ermöglicht. Durch eine derartige Anordnung wird die Bremswirkung verstärkt.

Bevorzugt ist die Fangvorrichtung als Schwimmsattelbremse ausgebildet. Dadurch ist eine zentrale und beispielsweise beidseitig einer Führungsschiene symmetrische Kraftableitung gewährleistet. Es ist jedoch auch möglich, die Fangvorrichtung als eine Festsattelbremse auszuführen, wobei die vorliegenden Elemente der Fangvorrichtung im Wesentlichen spiegelbildlich zu einer Führungsschiene eines Aufzuges angeordnet sind.

Es ist beispielsweise vorstellbar, dass die Fangvorrichtung in einer Schwimmsattelbremsanordnung mit mehreren, im Wesentlichen parallel liegenden, Bremskeilen versehen ist.

In einer derartigen Anordnung kann ein einzelnes Aktivierungselement vorgesehen sein, welches auf alle Bremskeile wirkt. Es ist auch möglich, dass jeder Bremskeil ein separates Aktivierungselement aufweist.

Analog kann auch nur ein Führungselement für mehrere Bremskeile vorgesehen sein. Bevorzugt weist jedoch jeder Bremskeil separate, dem Bremskeil zugehörige, Aktivierung- und Führungselemente auf.

Ein weiterer Aspekt der Erfindung betrifft ein Verfahren zum Bewegen eines Bremskeiles einer Fangvorrichtung in eine Fangposition, wobei ein Führungselement mit einem verschieblich darauf gelagerten Bremskeil mit einem Betätigungselement einer Stellenrichtung aus einer Ruheposition in eine Bremsinitialposition gebracht wird. Der Bremskeil wird mittels eines zusätzlichen Aktivierungselementes mit einer Bewegungskomponente in einer Richtung entlang seiner Bremsfläche in Richtung einer Fangposition bewegt.

Bevorzugt wird das Aktivierungselement zum oder beim Aktivieren der Fangeinrichtung in Wirkverbindung mit dem Führungselement gebracht. Ein derartiges Verfahren verkürzt die Einrückzeit einer Fangvorrichtung. Das erzwungene Einrücken respektive Bewegen des Bremskeiles macht dieses Verfahren im hohen Grade wiederhol- und berechenbar.

Es ist bevorzugt, dass durch das Bewegen des Bremskeiles in die Fangposition das Führungselement wieder in die ursprüngliche Ruheposition gebracht wird. Wenn das Führungselement schon während des Bremsvorganges wieder in seine Ruheposition zurückgestellt wird, wird die Rückstellung der Fangvorrichtung vereinfacht. Zusätzliche Rückstelleinrichtungen sind nicht nötig.

Bevorzugt wird das Führungselement beim Aktivieren der Fangvorrichtung mit einem Druckelement und besonders bevorzugt mit einer Schraubenfeder in die Bremsinitialposition bewegt. Diese erzwungene Bewegung verkürzt zusätzlich die Einrückzeit der Fangvorrichtung.

Im Zeitraum vor dem Aktivieren der Fangvorrichtung, das heisst in einem Betriebsmodus des Aufzuges, kann das Führungselement von einem Halteelement in der Ruheposition gehalten werden. Bevorzugt ist ein derartiges Halteelement ein Elektromagnet, dessen Stromzufuhr beispielsweise beim Aktivieren der Fangvorrichtung unterbrochen wird. Es ist jedoch möglich, anstelle des Elektromagneten auch mechanische Mittel wie Klinken oder Fallen anzuwenden. Sowohl ein Auslösen durch elektrische Mittel, wie einer Sicherheitssteuerung als auch mechanische Übergeschwindigkeitseinrichtungen ist möglich.

Das Führungselement kann nach dem Erreichen der ursprünglichen Ruheposition, insbesondere während und nach dem Bremsvorgang, von einem Halteelement wieder in der Ruheposition gehalten werden. Auch ein nur kurzfristiges Öffnen des Halteelementes ermöglicht es der Fangvorrichtung, den Bremsvorgang einzuleiten. Der Bremsvorgang wird fortgesetzt, auch wenn das Halteelement gewollt oder nur versehentlich wieder mit dem Führungselement in Wirkverbindung ist.

Da das Führungselement durch die Bewegung des Bremskeiles in die ursprüngliche Ruheposition zurück gebracht wird, ist sichergestellt, dass insbesondere im Falle, dass das Haltelement ein Elektromagnet ist, die Energie für den Elektromagneten klein gehalten werden kann. Dies liegt insbesondere daran, dass nach dem Rückstellen zwischen Elektromagnet und Führungselement kein oder nur ein sehr geringer Luftspalt bleibt, zu dessen Überwindung nur eine geringe magnetische Kraft erforderlich ist.

Ein weiterer Aspekt der Erfindung betrifft eine Aufzugseinrichtung mit einer wie vorliegend beschriebenen Fangvorrichtung. Insbesondere kann ein Aufzug mit einer oder mehreren derartigen Fangvorrichtungen versehen sein. Die Aktivierung der Fangvorrichtung bremst den Aufzug in seiner Aufwärtsbewegung ab und fängt ihn insbesondere auf. Bevorzugt führt das Aktivieren der Fangvorrichtung zu einer vollständigen Blockade des Aufzugs in einem Aufzugsschacht.

Zum Lösen der Fangvorrichtung kann der Aufzug in bekannter Art und Weise in Betrieb genommen werden. Durch eine einmalige kurze Fahrt entgegen der Fangrichtung wird die Fangvorrichtung gelöst. Durch den schrägen Winkel des Führungselementes und dessen zurückgestellte Lage in die Ruheposition bewegt sich der Bremskeil aufgrund der Schwerkraft in seine ursprüngliche Ruheposition zurück.

Anhand von Figuren, welche lediglich Ausführungsbeispiele darstellen, wird die Erfindung im Folgenden näher erläutert. Es zeigen:
- Figur 1:: Eine dreidimensionale Ansicht einer Fangvorrichtung;
- Figur 2:: eine teilweise aufgeschnittene Ansicht der Fangvorrichtung aus Figur 1 in der Ruheposition;
- Figur 3:: die Fangvorrichtung aus Figur 2 kurz nach dem Aktivieren;
- Figur 4:: die Fangvorrichtung aus Figur 2 nach längerer Aktivierungszeit in der Bremsinitialposition;
- Figur 5:: die Fangvorrichtung aus Figur 2 in der Fangposition;
- Figur 6:: eine schematische Darstellung der Führungsplatte der Fangvorrichtung aus Figur 1.

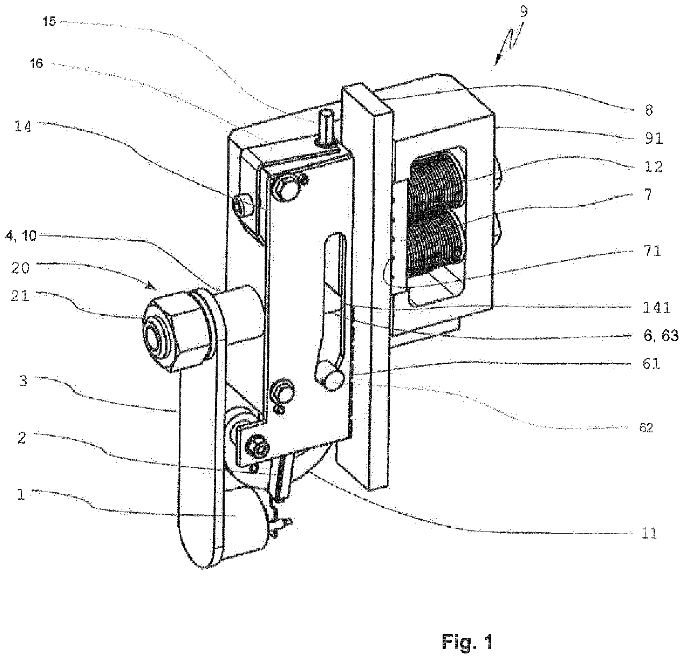

Figur 1 zeigt eine dreidimensionale Ansicht einer Ausführungsform einer Fangvorrichtung 9. Die Fangvorrichtung 9 weist ein Bremsgehäuse 91 auf und ist im Wesentlichen als Schwimmsattelbremse ausgeführt. Die Details der Befestigung der Fangvorrichtung 9 an einer Aufzugskabine und die Gestaltung der Lagerung des Schwimmsattels sind hier nicht gezeigt, sind jedoch dem Fachmann bekannt. Das Bremsgehäuse 91 ist im Wesentlichen u-förmig ausgebildet und erstreckt sich somit beidseits einer Führungsschiene 8. Am Bremsgehäuse 91 ist eine Stelleinrichtung 20 befestigt, welche eine Hülse 10, eine Feder 4, einen Elektromagneten 1 als Halteelement sowie eine Verstelleinrichtung 21, zum Einstellen einer Druckkraft der Feder 4 aufweist. Die Stelleinrichtung 20 wirkt durch eine Öffnung im Bremsgehäuse 91 auf ein Führungselement 2. Die Stelleinrichtung 20 weist eine Platte 3 auf, welche mit dem Elektromagneten 1 in Wirkverbindung ist.

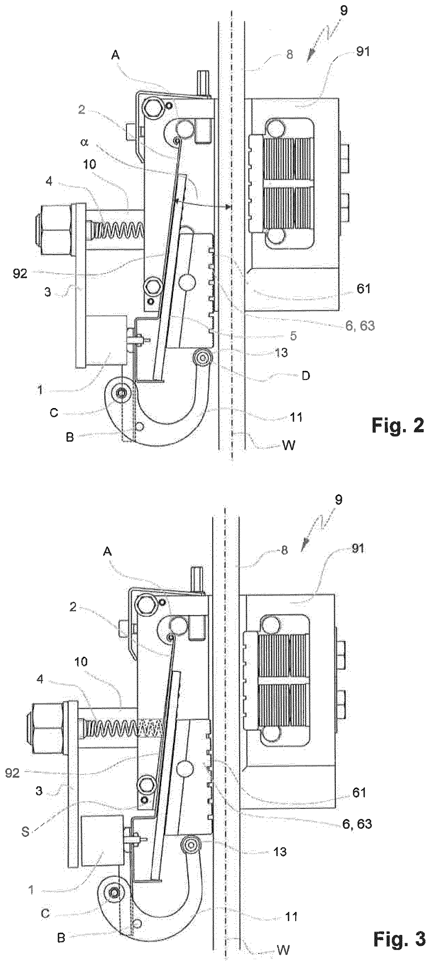

Auf oder an dem Führungselement 2 ist ein Bremselement 6 in der Form eines Bremskeils 63 (hier nur teilweise sichtbar) verschieblich gelagert. Auf beiden Seiten des Bremskeiles 63 erstrecken sich Führungsachsen 62. Die hier sichtbare Führungsachse 62 ist in einer Führungskontur 141 einer Führungsplatte 14 geführt. Auf der hier nicht sichtbaren Seite des Bremskeiles ist die Führungsachse 62 in einer Führungskontur des Bremsgehäuses geführt, welche im Wesentlichen der Führungskontur 141 der Führungsplatte 14 entspricht. Mittels der Führungskontur 141 und der Führungsachse 62 ist der Bremskeil 63 in einer unteren Ruheposition gehalten. Im in der Darstellung unteren Bereich der Fangvorrichtung 9 befindet sich ein Aktivierungselement 11 (Details sind in der Figur 2 ersichtlich). Im oberen Bereich des Bremsgehäuses 91 ist ein einstellbarer Anschlag 15 angeordnet. Dieser Anschlag 15 bestimmt eine Endposition beziehungsweise eine Begrenzung des Verfahrwegs des Bremskeils. Damit ist auch eine Fangposition des Bremskeils bestimmt. Die Einstellung des Anschlags 15 kann mit einem Sicherungsblech 16 gesichert werden.

Auf der in Bezug auf die Führungsschiene 8 gegenüberliegenden Seite des Bremskeils 63 weist das Bremsgehäuse 91 einen Käfig auf, der zwei Federpakete 12 als nachgiebiges Element aufweist. Auf den Federpaketen 12 ist eine Bremsplatte 7 gelagert.

Die Bremsplatte weist einen der Führungsschiene 8 zugewandten Bremsbelag 71 auf, der beispielsweise in einem Karomuster strukturiert ist.

Figur 2 zeigt eine Ansicht der Fangvorrichtung 9 aus Figur 1. Gleiche Bezugszeichen werden für gleiche Teile verwendet. Zur besseren Darstellung ist in dieser zweiten Ansicht die Führungsplatte 14 nicht gezeigt. Die Sicht auf den Bremskeil 63 bleibt frei. Der Bremskeil 63 weist eine Bremsfläche 61 auf, welche vorliegend im Wesentlichen in einem Karomuster strukturiert ist. Anstelle des Karomusters sind auch andere Formen wie ein Rillenmuster oder auch eine Bremsfläche mit eingesetzten beispielsweise keramischen Bremsmaterialien möglich. Im Bremsgehäuse 91 befindet sich das Führungselement 2, welches an einem Dreh- und Schwenkpunkt A festgelegt ist. Das Führungselement 2 bildet in der Ruheposition mit der Wirkachse W einen Keilwinkel a. Auf dem Führungselement 2 ist ein Rollenkäfig 5 angeordnet, durch welchen der Bremskeil 63 verschieblich auf dem Führungselemente 2 gelagert ist. Unterhalb des Bremskeiles 63 ist ein Aktivierungselement 11 gezeigt, welches an einer Schwenkachse C am Bremsgehäuse 91 festgelegt ist. Eine im Punkt D befestigte Rolle 13 steht in Wirkverbindung mit dem Bremskeil 63. Zwischen den beiden Punkten C und D befindet sich ein Anlenkpunkt B mit einer Anlenkachse, welche in Wirkverbindung mit dem Führungselement 2 steht. Die U-förmige Ausgestaltung des Aktivierungselementes 11 ermöglicht den Eingriff des Aktivierungselementes 2 am Bremskeil 63, ohne mit dem Führungselement 2 zu interferieren. Die Wirkachse W ist im Wesentlichen eine Achse, welche in Bewegungsrichtung des Aufzuges verläuft.

Das Führungselement 2 besteht aus einem Blech, welches im unteren Bereich, entgegengesetzt der Fangposition mehrfach abgewinkelt ist, um den Elektromagneten 7 aufzunehmen. Der Rollenkäfig 5 ist am Führungselement 2 befestigt und steht im unteren Bereich des Führungselementes 2 zusätzlich auf einer weiteren Abwinklung des Bleches auf. Das Führungselement 2 weist eine zusätzliche Verlängerung auf, welche mit dem Anlenkpunkt B des Aktivierungselementes 11 in Verbindung steht.

Die Fangvorrichtung 9 aus Figur 2 ist vorliegend in einem Betriebszustand des Aufzugs gezeigt und somit in einer Ruheposition der Fangvorrichtung 9. Während der Ruheposition der Fangvorrichtung 9 ist der Elektromagnet 1 bestromt. Damit haftet er an der Platte 3, welche über die Hülse 10 am Bremsgehäuse 91 festgelegt ist. Innerhalb der Hülse 10 befindet sich eine Schraubenfeder 4 als Druckelement. Auf seiner entgegengesetzten Seite ist der Elektromagnet 1 am Führungselement 2 befestigt.

Das Führungselement 2 mit dem Rollenkäfig 5 und dem Bremskeil liegt in der Ruheposition der Fangvorrichtung im Wesentlichen an einer Druckfläche 92 des Bremsgehäuses 91 an. Die Druckfläche 92 ist dementsprechend zur Wirkachse W um den Keilwinkel α geneigt. Im Wesenlichen bedeutet, der Elektromagnet 1 so eingestellt ist dass das Führungselement 2 an der Druckfläche 92 anliegt.

Figur 3 zeigt die Fangvorrichtung 9 aus Figur 2 kurz nachdem die Fangvorrichtung 9 aktiviert wurde. Die Schraubenfeder 4, welche durch die Öffnung im Bremsgehäuse 91 in Wirkverbindung mit dem Führungselement 2 ist, übt einen Druck auf das Führungselement 2 aus. In dem Moment, in welchem der Elektromagnet 1 stromlos ist, löst sich die Wirkverbindung zwischen Elektromagnet 1 und Platte 3. Das Druckelement 10 drückt auf das Führungselement 2, wodurch es um die Schwenkachse A geschwenkt wird. Zwischen Bremsgehäuse 91 beziehungsweise Druckfläche 92 und Führungselement 2 entsteht ein Spalt S. Das Führungselement 2 wird zusammen mit dem Bremskeil 63 in Richtung der Führungsschiene 8 bewegt. Zusätzlich wirkt das Führungselement 2 auf den Anlenkpunkt B des Aktivierungselementes 11, wodurch das Aktivierungselement 11 über seinen Drehpunkt C mit der Rolle 13 im Wesentlichen entlang der Wirkachse W in Richtung einer Fangposition bewegt wird.

Da der Bremskeil 63 in Richtung der Fangposition bewegt wird, wird der Abstand zwischen Führungsschiene 8 und dem Führungselement 2 beziehungsweise dem Bremskeil 63 verkürzt, da der Bremskeil 63 auf einer zur Führungselement 2 geneigten Ebene verschiebbar gelagert ist. Die Strecke wird zusätzlich durch die Wirkung des Druckelementes 4,10 verringert. Der Bremskeil 63 wird somit bis zum Kontakt der Bremsfläche 61 mit der Führungsschiene 8 bereits in Richtung der Fangposition bewegt, was die Einrückzeit deutlich verkürzt.

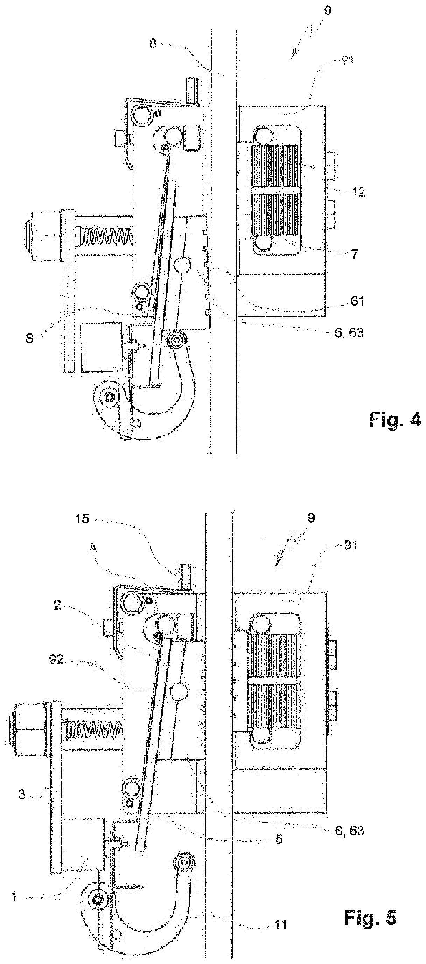

Figur 4 zeigt die Fangvorrichtung 9 aus Figur 2 kurz nachdem der Bremskeil 63 in Wirkverbindung mit der Führungsschiene 8 getreten ist. Der Spalt S hat sich gegenüber der Position aus Figur 3 vergrössert. Der Bremskeil 63 wird durch die Wirkung des Aktivierungselementes 11 und die bereits entstanden Reibwirkung zwischen Bremsbelag 61 und Führungsschiene 8 weiterhin in den Keilspalt hineingetrieben. Da die Fangvorrichtung 9 als Schwimmsattelbremse ausgeführt ist, verschiebt sich das Bremsgehäuse 91 relativ zur Führungsschiene 8 in Richtung zum Bremskeil 63, wobei die Bremsplatte 7 in Wirkverbindung mit der Führungsschiene 8 tritt. Die weitere Abwärtsbewegung des Aufzuges treibt den Bremskeil 63 weiter in den Keilspalt hinein.

Das Führungselement 2 wird wegen der Wirkung des Bremskeils, der in den Keilspalt hineingezogen wird, in seine Ruheposition zurückgedrückt und die Tellerfedern 12, auf welchen die gegenüberliegende Bremsplatte 7 gelagert ist, werden langsam eingedrückt und bestimmen damit eine resultierende Andrückkraft mit der der Bremsbelag 61 und die gegenüberliegende Bremsplatte 7 an die Führungsschiene gedrückt werden.

Figur 5 zeigt die Fangvorrichtung 9 aus Figur 2 in ihrer endgültigen Fangposition. Der Bremskeil 63 ist bezüglich des Bremsgehäuses 91 in seiner obersten Lage. Der Rollenkäfig 5 wurde wegen der Anpresskraft des Bremskeils 63 im Bremsgehäuse 91 mit angehoben. Der Bremskeil 63 steht in der endgültigen Fangposition an dem einstellbaren Anschlag 15 an. Der Spalt zwischen Bremsgehäuse 91 und Führungselement 2 hat sich verringert, oder ganz geschlossen. Das Führungselement 2 wurde durch den Bremskeil 63 um seine Schwenkachse A herum in seine ursprüngliche Ruheposition geschwenkt. Der Luftspalt zwischen Elektromagnet 1 und Platte 3 hat sich verringert oder vollständig geschlossen. Der Elektromagnet 1 kann nun bestromt werden und in Wirkverbindung mit der Platte 3 treten, ohne unnötige Energiezufuhr. Das Aktivierungselement 11 befindet sich auch in der ursprünglichen Ruheposition.

Die Fangvorrichtung 9 befindet sich nun in der Fangposition und eine Weiterfahrt in Sperrrichtung wird gebremst oder verhindert. Sobald sich jedoch der Aufzug in seiner Bewegungsrichtung nach oben beziehungsweise in einer der Fangrichtung entgegengesetzter Richtung bewegt, wird der Bremskeil 63 aus der Verengung heraus getrieben. Der Bremskeil 63 läuft im Anschluss durch Gravitationskräfte auf dem Rollenkäfig 5 zurück in seine Ruheposition, in welcher er sofort wieder einsatzbereit ist (siehe dazu Figur 2), wobei auch der Rollenkäfig 5 wieder in seine Ausgangsstellung zurückrollt.

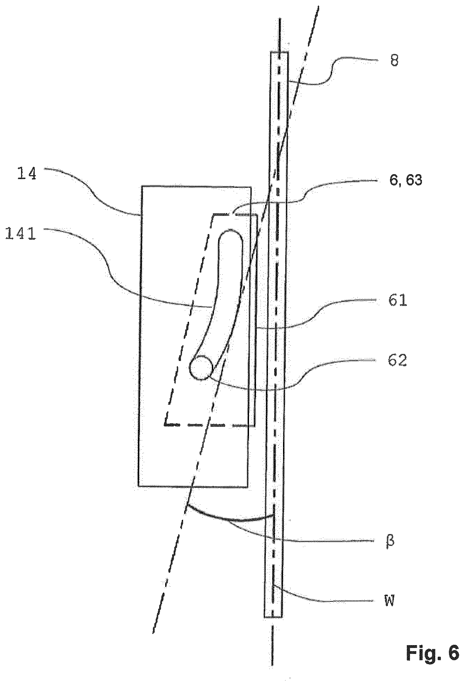

Figur 6 zeigt die Führungsplatte 14 mit ihrer Führungskontur 141 und dem Winkel β zwischen der Wirkachse W und der Führungskontur 141. Der Winkel β entspricht im Wesentlichen dem Keilwinkel a (siehe Fig. 2). Die Achse der Führungskontur 141 ist variabel und jeweils als Tangente der Kontur definiert, wobei der Winkel β jeweils zwischen dieser Tangente und der Führungsschiene 8 bestimmt wird. Die Bremsfläche 61 des Bremskeiles 63 ist im Wesentlichen parallel zur Wirkachse W. Der Bremskeil 63 weist ein Führungsachse 62 auf, die in der Führungskontur 141 geführt ist. Die Führungskontur 141 ist wie vorliegend gezeigt zur Wirkachse W hin gekrümmt ausgeführt. Dies begünstigt ein sehr schnelles Einrücken des Bremskeiles zur Wirkachse W respektive zur Führungsschiene 8 hin.

Fallweise ist beispielsweise das untere Ende des Führungselements 2 oder die Befestigung des Elektromagnets 1 elastisch ausgeführt. Damit kann das Führungselement 2 bei eingezogenem Bremskeil 63 vollständig an die Druckfläche 92 des Bremsgehäuses 91 gedrückt werden, ohne dass der Elektromagnet überlastet wird. Selbstverständlich kann die Fangvorrichtung bedarfsweise mit Sensoren ausgerüstet werden, welche eine Stellung des Bremskeils überwachen. Anordnung des Elektromagnets 1 und der Druckplatte 3 können auch vertauscht werden.

Anstelle des in den Figuren gezeigten Bremskeils 63 kann allenfalls auch eine Fang- oder Sperrrolle verwendet werden oder die Führung des Bremskeils beziehungsweise des Bremselements mittels Führungsachse 62 kann auch lediglich einseitig erfolgen, so dass das Bremselement beispielsweise auf der dem Bremsgehäuse zugewandten Seite lediglich durch eine Fläche geführt ist.

## Patentansprüche

1. Fangvorrichtung (9) für einen Aufzug,
umfassend ein Bremselement (6),
ein Führungselement (2), auf dem das Bremselement (6) in einer Führung (5) verschiebbar gelagert ist, wobei das Führungselement (2) zwischen einer Ruheposition und einer Bremsinitialposition bewegbar ist und eine Stelleinrichtung (20) mit einem Betätigungselement (1, 4), welches auf das Führungselement (2) wirkt, um das Führungselement von der Ruheposition in die Bremsinitialposition zu bewegen
wobei
die Fangvorrichtung (9) wenigstens ein zusätzliches Aktivierungselement (11) umfasst, welches beim Aktivieren der Fangvorrichtung (9) in Wirkverbindung mit dem Bremselement (6) ist oder bringbar ist,
und mittels welchem das Bremselement (6) mit zumindest einer Bewegungskomponente in einer Richtung gegen eine Fangposition hin bewegbar ist, **dadurch gekennzeichnet, dass**
das Führungselement (2) während einem Bremsvorgang in seine Ruheposition zurück bewegbar ist.

2. Fangvorrichtung (9) nach Anspruch 1,
**dadurch gekennzeichnet, dass**
der Bremselement (6) ein Bremskeil (63) mit einer Bremsfläche (61) ist,
das zusätzliche Aktivierungselement (11) beim Aktivieren der Fangvorrichtung (9) in Wirkverbindung mit dem Bremskeil (63) ist oder bringbar ist, und
der Bremskeil (63) mittels des Aktivierungselements (11) mit zumindest einer Bewegungskomponente in einer Richtung entlang der Bremsfläche (61) des Bremskeils (63) gegen die Fangposition hin bewegbar ist.

3. Fangvorrichtung (9) nach Anspruch 1 oder 2,
**dadurch gekennzeichnet, dass**
beim Aktivieren der Fangeinrichtung (9) das Führungselement (2) in Wirkverbindung mit dem Aktivierungselement (11) ist oder bringbar ist, und / oder
das Aktivierungselement (11) an einem Bremsgehäuse (91) schwenkbar befestigt ist, wobei das Aktivierungselement (11) mit dem Führungselement (2) anlenkbar ist.

4. Fangvorrichtung (9) nach einem der Ansprüche 1 bis 3,
**dadurch gekennzeichnet, dass**
das Aktivierungselement (11) eine Rolle (13) zur Herstellung der Wirkverbindung mit dem Bremselement (6) oder dem Bremskeil (63) aufweist.

5. Fangvorrichtung (9) nach Anspruch 4,
**dadurch gekennzeichnet, dass**
das Aktivierungselement (11) einen Anlenkpunkt, insbesondere eine Anlenkachse (B), für das Führungselement (2) aufweist, welcher Anlenkpunkt (B) im Wesentlichen zwischen einer Schwenkachse (C) und der Rolle (13) positioniert ist.

6. Fangvorrichtung (9) nach einem der Ansprüche 1 bis 5,
**dadurch gekennzeichnet, dass**
das Betätigungselement (1, 4) ein Halteelement, insbesondere einen Elektromagneten (1), und ein Druckelement, insbesondere eine Spiralfeder (4) umfasst.

7. Fangvorrichtung (9) nach Anspruch 6,
**dadurch gekennzeichnet, dass**
das Halteelement (1) am Führungselement (2) befestigt ist.

8. Fangvorrichtung (9) nach einem der Ansprüche 6 und 7,
**dadurch gekennzeichnet, dass**
das Druckelement (4) in Wirkverbindung mit dem Führungselement (2) ist und insbesondere eine Verstell Einrichtung (21) zum Einstellen der Druckkraft auf das Führungselement (2) aufweist.

9. Fangvorrichtung (9) nach einem der Ansprüche 1 bis 8,
**dadurch gekennzeichnet, dass**
die Fangvorrichtung (9) eine Führungsplatte (14) mit einer Führungskontur (141) zum Führen des Bremselements (6) oder des Bremskeils (63) aufweist.

10. Fangvorrichtung (9) nach Anspruch 9,
**dadurch gekennzeichnet, dass**
die Führungskontur (141) zu einer Wirkachse (W) der Fangeinrichtung (9) einen Keilwinkel (a) aufweist und insbesondere eine zur Wirkachse (W) zumindest teilweise gekrümmte Kontur aufweist.

11. Fangvorrichtung (9) nach einem der Ansprüche 1 bis 10,
**dadurch gekennzeichnet, dass**
die Fangvorrichtung eine Bremsplatte (7) aufweist, welche auf einem nachgiebigen Element (12), insbesondere auf einem Federpaket, gelagert ist, wobei die Bremsplatte (7) derart angeordnet ist, dass eine Führungsschiene (8) zwischen dem Bremselement (6) oder dem Bremskeil (63) und der Bremsplatte (7) anordnungsbar ist.

12. Verfahren zum Bewegen eines Bremselements einer Fangvorrichtung nach einem der Ansprüche 1 bis 11 in eine Fangposition, umfassend die Schritte bringen eines Führungselementes mit einem verschieblich darauf gelagerten Bremselement (6) mittels eines Betätigungselementes (1, 4) einer Stelleinrichtung (20) aus einer Ruheposition in eine Bremsinitialposition,
wobei
beim Aktivieren der Fangeinrichtung (9) das Bremselement (6) mittels eines zusätzlichen Aktivierungselementes (11) mit zumindest einer Bewegungskomponente in einer Richtung einer Fangposition bewegt wird.

13. Verfahren nach Anspruch 12,
wobei das Führungselement (2) zum oder beim Aktivieren der Fangvorrichtung (9) in Wirkverbindung mit dem Aktivierungselement (11) gebracht wird, und wobei das Führungselement (2) durch die Bewegung des Bremselements (6) in die Fangposition in die ursprüngliche Ruheposition gebracht wird.

14. Verfahren nach einem der Ansprüche 12 oder 13,
wobei das Führungselement (2) bis zum Aktivieren der Fangvorrichtung (2) von einem Halteelement (1), insbesondere von einem Elektromagneten, in der Ruheposition gehalten wird,
wobei das Führungselement (2) bei einem Deaktivieren des Halteelement (1), insbesondere des Elektromagneten, von der Stelleinrichtung (20) in die Bremsinitialposition verschoben wird,
das Führungselement (2) nach dem Auslösen der Fangvorrichtung (9) und bei einem Einziehen von der Bremsinitialposition in die Fangposition in die ursprüngliche Ruheposition verschoben wird, und
das Führungselement (2) nach dem Erreichen der ursprünglichen Ruheposition von dem Halteelement(1), insbesondere von dem Elektromagneten, wiederum in der Ruheposition gehalten werden kann.

15. Aufzug mit einer Fangvorrichtung (9) nach einem der Ansprüche 1 bis 11.

## Claims

1. Safety catch (9) for an elevator, comprising
a brake element (6), a guide element (2) on which the brake element (6) is slidably mounted in a guide (5), the guide element (2) being movable between a rest position and a brake initial position,
and an adjustment device (20) comprising an actuation element (1, 4) which acts on the guide element (2) in order to move the guide element from the rest position into the brake initial position,
the safety catch (9) comprising at least one additional activation element (11) which is or can be brought into operative connection with the brake element (6) when the safety catch (9) is activated, and by means of which the brake element (6), together with at least one movement component, can be moved in a direction toward a catch position, **characterized in that**
the guide element (2) can be moved back into the rest position thereof during a braking process.

2. Safety catch (9) according to claim 1,
**characterized in that**
the brake element (6) is a brake wedge (63) having a brake surface (61), the additional activation element (11) is or can be brought into operative connection with the brake wedge (63) when the safety catch (9) is activated, and the brake wedge (63), together with at least one movement component, can be moved by means of the activation element (11) in a direction, along the brake surface (61) of the brake wedge (63), toward the catch position.

3. Safety catch (9) according to either claim 1 or claim 2,
**characterized in that**
when the safety catch (9) is activated the guide element (2) is or can be brought into operative connection with the activation element (11), and/or
the activation element (11) is pivotably secured to a brake housing (91), it being possible to articulate the activation element (11) by means of the guide element (2).

4. Safety catch (9) according to any of claims 1 to 3,
**characterized in that**
the activation element (11) has a roller (13) for establishing the operative connection to the brake element (6) or the brake wedge (63).

5. Safety catch (9) according to claim 4,
**characterized in that**
the activation element (11) has an articulation point, in particular an articulation axis (B), for the guide element (2), which articulation point (B) is positioned substantially between a pivot axis (C) and the roller (13).

6. Safety catch (9) according to any of claims 1 to 5,
**characterized in that**
the actuation element (1, 4) comprises a holding element, in particular an electromagnet (1), and a pressure element, in particular a spiral spring (4).

7. Safety catch (9) according to claim 6,
**characterized in that**
the holding element (1) is secured to the guide element (2).

8. Safety catch (9) according to either claim 6 or claim 7,
**characterized in that**
the pressure element (4) is in operative connection with the guide element (2) and in particular has an adjusting device (21) for adjusting the compressive force on the guide element (2).

9. Safety catch (9) according to any of claims 1 to 8,
**characterized in that**
the safety catch (9) has a guide plate (14) comprising a guide contour (141) for guiding the brake element (6) or the brake wedge (63).

10. Safety catch (9) according to claim 9,
**characterized in that**
the guide contour (141) has a wedge angle (α) with respect to an operative axis (W) of the safety catch (9) and in particular has a contour that is curved at least in part with respect to the operative axis (W).

11. Safety catch (9) according to any of claims 1 to 10,
**characterized in that**
the safety catch has a brake plate (7) which is mounted on a yielding element (12), in particular on a spring assembly, the brake plate (7) being arranged in such a way that a guide rail (8) can be arranged between the brake element (6) or the brake wedge (63) and the brake plate (7).

12. Method for moving a brake element of a safety catch according to any of claims 1 to 11 into a catch position, comprising the steps of
bringing a guide element, together with a brake element (6) mounted slidably thereon, from a rest position into a brake initial position by means of an actuation element (1, 4) of an adjustment device (20),
wherein
the brake element (6), together with at least one movement component, is moved toward a catch position by means of an additional activation element (11) when the safety catch (9) is activated.

13. Method according to claim 12,
wherein the guide element (2) is brought into operative connection with the activation element (11) in order to activate the safety catch (9) or when the safety catch is activated, and wherein the guide element (2) is brought into the original rest position by moving the brake element (6) into the catch position.

14. Method according to either claim 12 or claim 13,
wherein the guide element (2) is held in the rest position by a holding element (1), in particular by an electromagnet, until the safety catch (2) is activated,
wherein the guide element (2) is slid into the brake initial position by the adjustment device (20) when the holding element (1), in particular the electromagnet, is deactivated, the guide element (2) is slid into the original rest position after the safety catch (9) is triggered and when moved into the catch position from the brake initial position, and
the guide element (2), after reaching the original rest position, can be held in turn in the rest position by the holding element (1), in particular by the electromagnet.

15. Elevator comprising a safety catch (9) according to any of claims 1 to 11.

## Revendications

1. Dispositif d'arrêt (9), destiné à un ascenseur, comprenant
un élément de freinage (6),
un élément de guidage (2), sur lequel l'élément de freinage (6) est monté de façon coulissante dans un guide (5), l'élément de guidage (2) étant mobile entre une position de repos et une position initiale de freinage,
et un dispositif de commande (20) muni d'un élément d'actionnement (1, 4) qui agit sur l'élément de guidage (2) pour déplacer l'élément de guidage de la position de repos dans la position initiale de freinage
le dispositif d'arrêt (9) comprenant au moins un élément d'activation supplémentaire (11) qui, lors de l'activation du dispositif d'arrêt (9), est amené ou peut être amené en liaison fonctionnelle avec l'élément de freinage (6) et au moyen duquel l'élément de freinage (6) peut être déplacé avec au moins une composante de mouvement dans une direction vers une position d'arrêt, **caractérisé en ce que** l'élément de guidage (2) peut être ramené dans sa position de repos pendant une opération de freinage.

2. Dispositif d'arrêt (9) selon la revendication 1, **caractérisé en ce que**
l'élément de freinage (6) est une cale de freinage (63) pourvue d'une surface de freinage (61),
l'élément d'activation supplémentaire (11) est amené ou peut être amené en liaison fonctionnelle avec la cale de freinage (63) lors de l'activation du dispositif d'arrêt (9) et
la cale de freinage (63) au moyen de l'élément d'activation (11) peut être déplacée vers la position d'arrêt avec au moins une composante de mouvement dans une direction le long de la surface de freinage (61) de la cale de freinage (63).

3. Dispositif d'arrêt (9) selon la revendication 1 ou 2, **caractérisé en ce que**
lors de l'activation du dispositif d'arrêt (9), l'élément de guidage (2) est amené ou peut être amené en liaison fonctionnelle avec l'élément d'activation (11) et/ou
l'élément d'activation (11) est monté de manière pivotante sur un boîtier de frein (91), l'élément d'activation (11) étant relié de manière articulée à l'élément de guidage (2).

4. Dispositif d'arrêt (9) selon l'une des revendications 1 à 3, **caractérisé en ce que**
l'élément d'activation (11) comporte un galet (13) destiné à établir la liaison fonctionnelle avec l'élément de freinage (6) ou la cale de freinage (63).

5. Dispositif d'arrêt (9) selon la revendication 4, **caractérisé en ce que**
l'élément d'activation (11) comporte un point d'articulation, notamment un axe d'articulation (B), destiné à l'élément de guidage (2), lequel point d'articulation (B) est positionné sensiblement entre un axe de pivotement (C) et le galet (13).

6. Dispositif d'arrêt (9) selon l'une des revendications 1 à 5, **caractérisé en ce que**
l'élément d'actionnement (1, 4) comprend un élément de retenue, en particulier un électroaimant (1), et un élément de pression, en particulier un ressort hélicoïdale (4).

7. Dispositif d'arrêt (9) selon la revendication 6, **caractérisé en ce que**
l'élément de retenue (1) est fixé à l'élément de guidage (2).

8. Dispositif d'arrêt (9) selon l'une des revendications 6 et 7, **caractérisé en ce que**
l'élément de pression (4) est en liaison fonctionnelle avec l'élément de guidage (2) et comporte en particulier un dispositif de réglage (21) destiné à régler la force de pression sur l'élément de guidage (2).

9. Dispositif d'arrêt (9) selon l'une des revendications 1 à 8, **caractérisé en ce que**
le dispositif d'arrêt (9) comporte une plaque de guidage (14) pourvue d'un contour de guidage (141) destiné à guider l'élément de freinage (6) ou la cale de freinage (63).

10. Dispositif d'arrêt (9) selon la revendication 9, **caractérisé en ce que**
le contour de guidage (141) fait, par rapport à un axe fonctionnel (W) du dispositif d'arrêt (9), un angle de cale (a), et comporte en particulier un contour au moins partiellement incurvé par rapport à l'axe fonctionnel (W).

11. Dispositif d'arrêt (9) selon l'une des revendications 1 à 10, **caractérisé en ce que**
le dispositif d'arrêt comprend une plaque de freinage (7) qui est montée sur un élément flexible (12), en particulier un ensemble de ressorts, la plaque de frein (7) étant disposée de telle sorte qu'un rail de guidage (8) puisse être disposé entre l'élément de freinage (6) ou la cale de freinage (63) et la plaque de freinage (7).

12. Procédé de déplacement d'un élément de freinage d'un dispositif d'arrêt selon l'une des revendications 1 à 11 jusque dans une position d'arrêt, le procédé comprenant les étapes suivantes
amener un élément de guidage muni d'un élément de freinage (6), monté de manière coulissante sur celui-ci, d'une position de repos dans une position initiale de freinage au moyen d'un élément d'actionnement (1, 4) d'un dispositif de commande (20),
lors de l'activation du dispositif d'arrêt (9), l'élément de freinage (6) est déplacé en direction d'une position d'arrêt au moyen d'un élément d'activation supplémentaire (11) comportant au moins une composante de mouvement.

13. Procédé selon la revendication 12,
dans lequel l'élément de guidage (2) est amené en liaison fonctionnelle avec l'élément d'activation (11) en vue ou lors de l'activation du dispositif d'arrêt (9), et
dans lequel l'élément de guidage (2) est amené dans la position initiale de repos par le mouvement de l'élément de freinage (6) dans la position d'arrêt.

14. Procédé selon l'une des revendications 12 ou 13,
dans lequel l'élément de guidage (2) est maintenu dans la position de repos par un élément de retenue (1), notamment par un électroaimant, jusqu'à l'activation du dispositif d'arrêt,
dans lequel l'élément de guidage (2) est déplacé dans la position initiale de freinage par le dispositif de commande (20) lors de la désactivation de l'élément de retenue (1), en particulier de l'électroaimant,
l'élément de guidage (2) est déplacé dans la position initiale de repos après le déclenchement du dispositif d'arrêt (9) et lors du passage de la position initiale de freinage dans la position d'arrêt, et
après que l'élément de retenue (1), en particulier l'électroaimant, a atteint la position initiale de repos, l'élément de guidage (2) peut à son tour être maintenu en position de repos.

15. Ascenseur muni d'un dispositif d'arrêt (9) selon l'une des revendications 1 à 11.
